Europäisches Patentamt

European Patent Office

Office européen des brevets

(11) Publication number: 0 394 602
A1

# EUROPEAN PATENT APPLICATION

(21) Application number: 89850131.7

(51) Int. Cl.5: G01P 5/00

(22) Date of filing: 25.04.89

(43) Date of publication of application:
31.10.90 Bulletin 90/44

(84) Designated Contracting States:
DE FR GB

(71) Applicant: Kamemoto, Kyoji
224 Tatsunodai Zama-shi
Kanagawa-ken 228(JP)

(72) Inventor: Kamemoto, Kyoji
224 Tatsunodai Zama-shi
Kanagawa-ken 228(JP)

(74) Representative: Lautmann, Kurt O.
KURT LAUTMANNS PATENTBYRA AB Box
245
S-691 25 Karlskoga(SE)

(54) Method for measuring flow direction and flow velocity of a fluid utilizing pulse-laser-light-sheet and an apparatus used therefor.

(57) The invention provides a method for measuring flow velocity of a fluid flowing in a compartment of a vehicle utilizing a pulse-laser-light-sheet comprising a projecting pulse-laser-light-sheet having a constant pulse width towards an object to be measured inside, analysed or in the neighbourhood of which a fluid to be analysed flows, photographing the movement of tracer particles floating in the fluid by a suitable photographing means, and then obtaining the flow velocity of said fluidby analysing the space of the pulse light and flow velocity of the trace of said tracer particles on the photograph image, and an apparatus using said method.

Fig. 1

EP 0 394 602 A1

# Method for measuring flow direction and flow velocity of a fluid utilizing pulse-laser-light-sheet and an apparatus used thereto

## Field of the Invention

The present invention relates to a method for measuring the direction and velocity of flow of a fluid in a compartment of a vehicle to visuarize the flow of fluid in the said compartment and an apparatus used thereto.

## Description of the Prior Art

As a technique used to visualize flow of fluid, the halogen light sheet method has been conventionaly used. However, in the conventional method, the use of a high power is invitable as a light source. Nevertheless, in such a manner, the resolving power is weak and the apparatus lacks in mobility. Therefore, in the recent time, the laser light sheet method using a laser beam as a light source has been widely used.

In the laser-light-sheet method, a laser beam sent from a laser beam source is scattered in a sheet like form passing through a cylindrical lens and then thus obtained laser-light-sheet is projected into or in the surrounding of the object material to visualize the flow of fluid in or in the surrounding of the measuring object. In the fluid are imputted tracer particles which float in the fluid and move in accordance with the flow of the fluid. The flow of the fluid is visualized by photographing the movement of the tracer particles as image. The tracers may be selected form several materials floatable in the fluid.

According to the said laser-light-sheet method, not only it can attain an advantage that a high degree of illumination can be obtained using a low power of several watts to be able to catch the scattered light of tracer particules to obtain a clear visualized image, but also it can shine out a desired face or a complicated area of the measuring object by utilizing a light fiber or a simple optical instrument.

For instance, the prior arts about "the means of the laser-light-sheet" are disclosed in the printed publication as follows;

Printed Publication (1)

「 Flow Visualization Vol.5 No.18 (1985) 」
「 VISUALIZATION WITH LASER LIGHT SHEET APPLIED TO EXTERNAL AIR FLOW AROUND BUILDINGS 」 by S.MURAKAMI, S.KATO, S.AKABAYASHI

Published by 「the Flow Visualization Society of Japan 」

Printed Publication (2)

「Automotive Aerodynamics:An Update SP-706- (1987) 」
「 Advanced Experimental Techniques and Their Application to Automotive Aerodynamics 」 byR.Buchheim, M.A.Beeck, W.Hentschel,R.Piatek, D.Schwabe, F.Durst
Published by 「Society of Automotive Engineers,Inc._」 .

However, by means of the conventional laser-light-sheet method, even though it succeeded in the visualization of the movement of the fluid, the measurement of the flow rate of the fluid was difficult, since the measurement of flow rate plays the most important role on the solution of the movement of fluid.

## Summary of the Invention

In view of the problems holded by the conventional methods, the main object of the invention is to provide a method for measuring the flow velocity and the direction of fluid in a compartment of a vehicle and an apparatus used thereto utilizing a pulse-laser-light-sheet can recognize the flow velocity and direction of fluid via eyelight, in spite of using a simple method and a simple apparatus.

The invention has features to improve these conventional methods, one of which lies in projecting in or in the surrounding of the measuring object a pulse-laser-light sheet obtained by cutting a laser-light-sheet to a pulse-laser-light-sheet having a constant space, photographing the movement of the particles caused by the flow of fluid inner or in the surrounding of the measuring object by means of suitable photographing means, and then analyzing the said pulse space and the flow traces of the said tracer particles to be able to know the direction and flow velocity of the flow of the fluid by photographing the movement of the tracerparticles caused by the flow inner or outer of the object materials.

The instrument used to the method comprises a measuring objects inner or in the surrounding of which a fluid to be measured is flowed and the tracers are floating therein, a light projecting means projecting a pulse-laser-light-sheet having a constant space towards the said measuring object and a photographing means photographing the movement of the tracer particles caused by the flow of fluid in the saidmeasuring object.

Fig.1 is a schematic drawing of the measuring apparatus used in one example of the invention

Fig.2 is a drawing showing an experimental result relating to the fields of flow of fluid in a compartment of a vehicle using the apparatus shown in Fig. 1, and

Fig.3 is a drawing shownning an experimental result relaiting to the fields of flow velocity and turburent flow in a straight pipe used to the method of the invention.

## Detailed Description of the Preffered Embodiments

· Example

In the following, the invention will be explained in details by way of example to illustrate the method and apparatus of the invention.

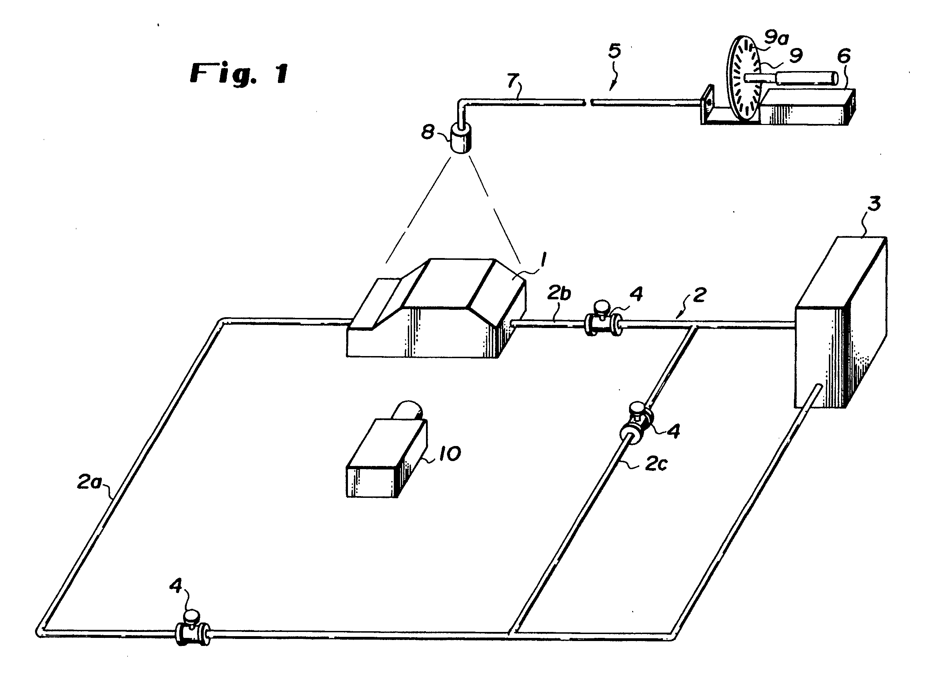

Fig.1 shows general ideas of an instrument used to the invention. At first, signature 1 in Fig.1 shows the measuring object, i.e.a model of compartment of vehicle drawn in a·redused scale of 1/3 and having a predetermined design to measure the flow of air in the compartment. The pipeline 2 is provided with the measuring object 1 to connect the front and back part of the compartment and the pipeline 2 forms a closed channel. 2a shows a blast pipe into the pipeline 2 and blasts air sent from blower 3 into the measuring object, 2b shows an exausts pipe, 2c does a discharge-regurator and 4 does a switch valve.

In measuring object 1, tracer particules floatable in the air are filled. As the tracer particles, for example, a globe having a diameter of 2 to 0.5mm or soap bubles having a diameter of 1mm are used. Of coursee, many kinds, not one kind, of globe may be used as floating tracer.

5 shows a means for projecting pulse-laser-light-sheet which comprises laser beam source 6, laser light transmitting optical fiber 7 and cylindrical lense 8 furnished at the top thereof and a doucer 9 having light received intermittently from light fiber 7 by cutting laser light sent from light source 6 to a pulse having a constant space.

In the concrete, 20mW He-Ne laser beam is used as a laser beam in the following example. The cylindrical lenses 8 are placed in an opposit place on the predetermined position over the measuring object 1. Screeening plate has slits 9 in a predetermined distance on the periphery thereof and rotates in a constant speed. The space of pulse is controlled in proportion to the flowing velosity of the fluid streaming into the measuring object as mentioned in the following example. In order to project the laser beam in a pulse, the laser source itself may be controlled electically so as to illuminate intermittently.

10 is a video-camera to photograph the movement of tracer particles floating in the atmosphere of the projected pulse-laser-light-sheet. Other photographing means may be used.

Thereby, air stream sent into the measuring object 1 has a predetermined flowing volume and laser beam is emitted from laser source.Then the laser beam is cutted into pulse by means of a douser to form a pulse light having a form of thin sheet by diffusion due to cylindrical lens 8. This thin sheet like pulse light is projected towards the measuring object 1. Thus, the movement of the tracer particles moving according to the flow of fluid in the measuring object 1 is photographed by video-camera 1 0.

Accordingly, not only the flow pattarn of the air in the measuring object, but the flow velocity of the air can be also catched in a vector expression by following up the trace of the particiles on the basis of the pulse space by the vedeo camera.

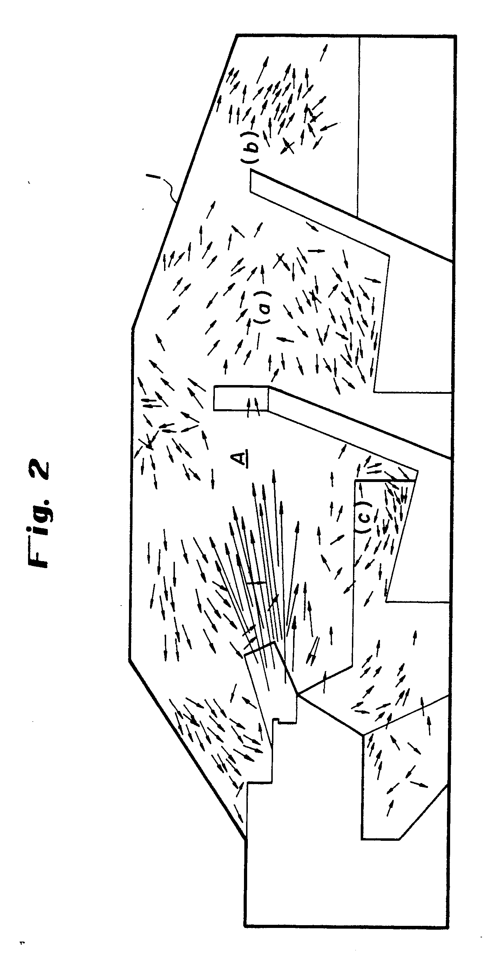

Fig.2 is a drawing showing an the experimental results of flow fields on a section of the model of a compartment. The vectors shown on Fig.2 reveals the flow of the air in the compartment. According to the drawing, the air A sent out of the out-let colloids to the upper part of the frontage of the front sheet, the greater part of the colloided air circulates towards front glass drawing a large arc via the inner surface of the roof in a fast speed. On the other hand, it can be seen from Fig.2 that the air got over the front sheet or passed through the space between the front sheets convects eddying slowly in the lower part of back sheet (B) and behind thereof (C) . Similar eddying flow of fluid can be seen in the lower part of the front sheet(D). In such a manner, complex flow fields of fluid an dflow velocity in the compartment can be seen at glance through visual organ and thereby the internal design of the compartment can be practised controlling the flow of fluid.

Furthermore, it is necessary to attain such excellent results that for example, a pulse light of a degree of 1000 Hz is irradiated in the vincinity of the air nozzle (E) and use a pulse beam of a degree of 250 Hz is irradiated to lower part (B) and backside of the back sheet (C) and selectand use an appropriate pulse in accordance with the velocity of fluid flow.

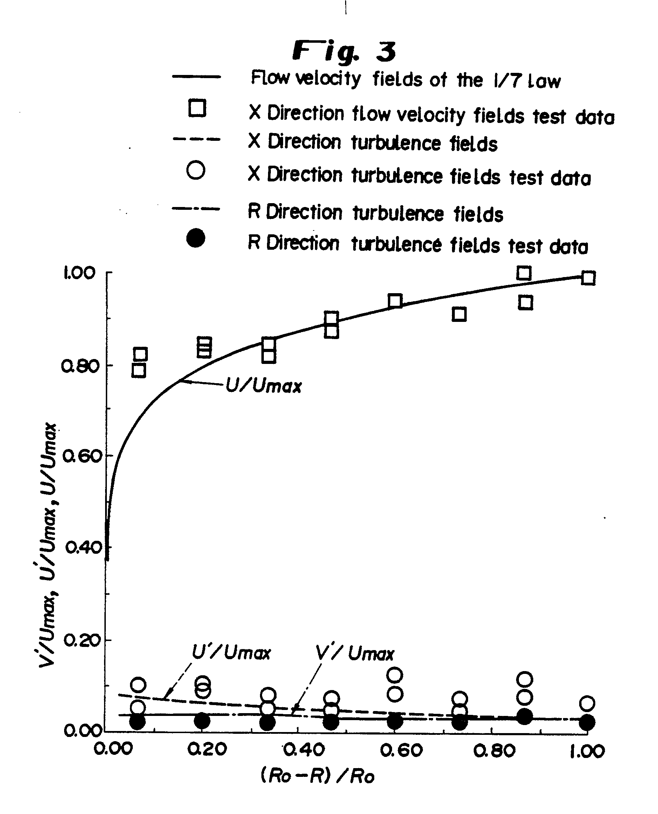

The fields of flow velocity and turbulance of a turburant flow( $Re = 9.29 \times 10^4$) in a straight pipe is examined. The obtained results are shown in Fig.3. The straight pipe used was a circular pipe having a diameter of 50 mm .

The full line in Fig.3 shows a flow velocity fields according to the 1/7 law. According to the results of this experiment, it became apparent that an average flow velocity fields per time of turbulent flow was adequate in some degree excluding the neighborhood of pipe wall. The broken line and one dot chain line in the drawing show results of measurement of turbulence fields respectively along pipe axis direction ( X direction ) and radius direction (R direction ) according to the results obtained by Laufer, and the experimental results show good coincide with the results of Laufer.

Moreover, in the above mentioned example, flow velocity of fluid in the measuring object is tried to measure, but it is needless to say that the flow velocity of general flow in the surrounding of the measuring object can be also measured by the same procedure.

As mentioned in the above, according to the invention,a laser-light-sheet is projected in pulse towards the measuring object and the movement of the tracer partcles inor in the surrounding of the measuring object is photographed under projection of light and then the flow pattern and flow velocity are analysed by the flow traces of the tracer particles in a picture and can know the velocity of fluid via visual sense.

Furthermore, since the projection of the laser-light-sheet can be simply carried out by fitting additional supplements to the laser-light-sheet projecting apparatus, the flow velocity of fluid can be easily detected using a simplemethod or apparatus and in a lesser cost.

**Claims**

1) Method for measuring a flow velocity of a fluid utilizing a pulse laser light which comprises projecting a pulse-laser-light-sheet having a constant space towards a measuring object inner or in the neighbourhood of which a fluid to be measured flows, photographing the movement of tracer particles floating in the fluid caused by the flow in or in the neighbourhood of the measuring object by a suitable photographing means, and then obtaining the flow direction and flow velocity of said fluid by analysing both space of the pulse light and flow of the traces of said tracer particls on the photograph image.

2) Method for measuring a flow velocity of a fluid according to claim 1, wherein the fluid to be measured is air.

3) Method for measuring a flow velocity of a fluid according to claim 1, wherein the measuring object is an automobile.

4) Method for measuring a flow velocity of a fluid according to claim 1, wherein said tracer particles used is of expandded polystyren.

5) Method for measuring a flow velocity of a fluid according to claim 1, wherein said photographing means is a video-camera.

6) Apparatus for measuring flow velocity of a fluid utilizing a pulse-laser-light-sheet which comprises a measuring object in or in the neighbourhood of which a fluid to be measured is flown and tracer particules floating therein, a means for projecting the pulse-laser-light-sheet towards a measuring object,and a means for photographing to photograph movements of tracer particles caused by the flow of fluid in said measuring object.

7) Apparatus for measuring flow velocity of fluid according to claim 6, wherein means for projecting a pulse-laser-light- sheet, a douser member to cut the light line of the laser-light-sheet into a pulse light having a constant space to ma ke thelaser-light-sheet pulsate by the douser member.

8) Apparatus for measuring flow velocity of fluid accoding to claim 6, wherein said pulse laser light projecting means is formed so as to project a pulse light as a laser-light-sheet having a constant space by controlling electrically a laser generator.

9) Method for measuring a flow velocity of a fluid according to claim 6, wherein the fluid to be measured is air.

10) Method for measuring a flow velocity of a fluid according to claim 6, wherein the measuring object is an automo bile.

11) Method for measuring a flow velocity of a fluid according to claim 6, wherein said tracer particles used is of expanded polystyren.

12) Method for measuring a flow velocity of a fluid according to claim 6, wherein said photographing means is a video-camera.

**Fig. 1**

EP 0 394 602 A1

**Fig. 2**

Fig. 3

—— Flow velocity fields of the 1/7 law

□ X Direction flow velocity fields test data

--- X Direction turbulence fields

○ X Direction turbulence fields test data

—·— R Direction turbulence fields

● R Direction turbulence fields test data

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | APPLIED OPTICS, vol. 24, no. 1, January 1985, pages 44-52, Optical Society of America, New York, US; R.J. ADRIAN et al.: "Pulsed laser technique application to liquid and gaseous flows and the scattering power of seed materials" * Page 44, paragraphs 1-3; page 49, paragraph 2; page 50, column 1, last paragraph - page 51, paragraph 1; page 52; figures 1,11,12 * | 1,2,4-6 ,8,9,11 ,12 | G 01 P 5/00 |
| Y | IDEM | 3,7,10 | |
| X | REVIEW OF SCIENTIFIC INSTRUMENTS, vol. 51, no. 11, November 1980, pages 1504-1508, America Institute of Physics, New York, US; R.B. OWEN et al.: "Laser beam manifold and particle photography system for use in fluid velocity measurements" * Page 1504 - page 1505, paragraph 1; figures 1-3 * | 1,6,7 | |
| A | IDEM | 5,12 | TECHNICAL FIELDS SEARCHED (Int. Cl.5) G 01 P G 01 M G 01 S A 61 B |
| Y | AUTOMOBILTECHNISCHE ZEITSCHRIFT, vol. 80, no. 5, May 1978, pages 183-186; S.R. AHMED et al.: "Berechnung der Umströmung eines Fahrzeuges nach dem Panel-Verfahren" * Page 183, paragraphs 4-6; figure 1 * -/- | 3,10 | |

The present search report has been drawn up for all claims

| Place of search | Date of completion of the search | Examiner |
|---|---|---|
| THE HAGUE | 15-12-1989 | ROBINSON M.A. |

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN, vol. 8, no. 48 (P-258)[1485], 3rd March 1984; & JP-A-58 200 167 (OLYMPUS KOGAKU KOGYO K.K.) 21-11-1983 * Abstract * | 7 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 15-12-1989 | ROBINSON M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)